# EUROPÄISCHE PATENTSCHRIFT

(11) **EP 3 111 117 B1**
(45) Veröffentlichungstag und Bekanntmachung des Hinweises auf die Patenterteilung: **16.01.2019**
(21) Anmeldenummer: 15703999.1
(22) Anmeldetag: 12.02.2015
(51) Int. Cl.: F16J 15/34

(54) **GLEITRINGDICHTUNG MIT FÖRDERHÜLSE**
SLIDING RING SEAL WITH CONVEYING SLEEVE
JOINT D'ÉTANCHÉITÉ À BAGUE DE GLISSEMENT COMPRENANT UN MANCHON DE REFOULEMENT

(30) Priorität: 25.02.2014 DE 102014203336
(43) Veröffentlichungstag der Anmeldung: 04.01.2017
(73) Patentinhaber: EagleBurgmann Germany GmbH & Co. KG, 82515 Wolfratshausen (DE)
(72) Erfinder: FICHTNER, Josef, 82515 Wolfratshausen (DE); LEDIG, Stefan, 82515 Wolfratshausen (DE); SKRZIDLO, Joachim, 82515 Wolfratshausen (DE); KOLLINGER, Rudolf, 82549 Königsdorf (DE); BÖHM, Thomas, 82067 Zell (DE); FRÖHLICH, Daniel, 82538 Geretsried (DE)
(74) Vertreter: Hoefer & Partner Patentanwälte mbB
(86) Internationale Anmeldenummer: PCT/EP2015/052933
(87) Internationale Veröffentlichungsnummer: WO 2015/128196

(56) Entgegenhaltungen:
- CH-A5- 560 341
- US-A- 3 236 529
- US-A1- 2008 217 861

## Beschreibung

Die vorliegende Erfindung betrifft eine Gleitringdichtungsanordnung mit einer rotierenden Fördereinrichtung zur verbesserten Kühlung einer Gleitringdichtung.

Gleitringdichtungsanordnungen sind aus dem Stand der Technik in unterschiedlichen Ausgestaltungen bekannt. Ein Problemkreis bei derartigen Gleitringdichtungen liegt häufig darin, dass im Betrieb relativ hohe Temperaturen auftreten können. Um Beschädigungen an der Gleitringdichtung zu vermeiden, muss daher diese Wärme abgeführt werden. Hierbei ist es bekannt, derartige Wärme beispielsweise mit einem separaten Versorgungsmedium abzuführen. Zur Zirkulation derartiger Versorgungsmedien wird üblicherweise eine externe Pumpe verwendet. Weiter können beispielsweise auch sogenannte Pumpringe verwendet werden, welche jedoch üblicherweise nur eine geringe Förderleistung bereitstellen können und somit auch nur eine geringe Wärmeabfuhr sicherstellen können. Ferner ist aus der DE 10 2011 118 294 A1 die Verwendung einer Tesla-Pumpe zur Zirkulation eines Versorgungsmediums bekannt. Diese Tesla-Pumpe hat sich grundsätzlich bewährt, es wäre jedoch wünschenswert, weitere, insbesondere kleinbauende, Alternativen zu haben. Ferner ist aus der US 2008/0217861 A1 eine Gleitringdichtungsanordnung mit den Merkmalen des Oberbegriffs des Anspruchs 1 bekannt.

Es ist daher Aufgabe der vorliegenden Erfindung, eine Gleitringdichtungsanordnung bereitzustellen, welche bei einfachem Aufbau und kostengünstiger Herstellbarkeit nur einen kleinen Bauraum einnimmt, aber dennoch eine hohe Förderleistung bereitstellen kann.

Diese Aufgabe wird durch eine Gleitringdichtungsanordnung mit den Merkmalen des Anspruchs 1 gelöst, die Unteransprüche zeigen bevorzugte Weiterbildungen der Erfindung.

Die erfindungsgemäße Gleitringdichtungsanordnung mit den Merkmalen des Anspruchs 1 weist den Vorteil auf, dass eine hohe Förderleistung bereitgestellt werden kann, wobei die erfindungsgemäße Fördereinrichtung nur einen kleinen Bauraum einnimmt. Hierbei weist die erfindungsgemäße Fördereinrichtung sowohl in axialer Richtung, als auch in radialer Richtung, nur einen kleinen Bauraum auf. Dies wird erfindungsgemäß dadurch erreicht, dass die Fördereinrichtung einen hülsenförmigen Grundkörper mit ersten Durchgangsöffnungen und zweiten Durchgangsöffnungen aufweist. Die Fördereinrichtung rotiert dabei gemeinsam mit dem rotierenden Gleitring und weist einen Fluidpfad durch die Fördereinrichtung selbst auf, welcher von außen nach innen und von innen wieder nach außen verläuft. Dies wird erfindungsgemäß dadurch erreicht, dass im hülsenförmigen Grundkörper erste und zweite Durchgangsöffnungen vorhanden sind. Hierbei weisen die ersten Durchgangsöffnungen einen ersten Eintrittsbereich an einer Außenseite des hülsenförmigen Grundkörpers auf und einen ersten Austrittsbereich am Innenumfang des hülsenförmigen Grundkörpers auf. Die zweiten Durchgangsöffnungen weisen umgekehrt einen zweiten Eintrittsbereich am Innenumfang des hülsenförmigen Grundkörpers strömen. Die erfindungsgemäße Fördereinrichtung ist dabei sehr robust aufgebaut und kann auch relativ kostengünstig bereitgestellt werden. Durch die Fluidumlenkung an der Fördereinrichtung kann somit gezielt Wärme an sehr heißen Bereichen der Gleitringdichtungsanordnung abgeführt werden. Die erfindungsgemäße Fördereinrichtung kann dabei aufgrund ihres hülsenförmigen Aufbaus direkt über einer Wärmequelle angeordnet werden und gezielt Wärme abführen. Insbesondere führt die Fördereinrichtung das Fluid dabei in die Nähe des Dichtspalts zwischen dem rotierenden und dem stationären Gleitring der Gleitringdichtungsanordnung. Die Fördereinrichtung umfasst eine zusätzliche Pumpstufe an einem Axialende des hülsenförmigen Grundkörpers. Durch das Vorsehen der zusätzlichen Pumpstufe kann die Förderleistung der Fördereinrichtung weiter vergrößert werden.
Vorzugsweise weisen die ersten Durchgangsöffnungen eine unterschiedliche geometrische Form zu den zweiten Durchgangsöffnungen auf. Hierdurch kann insbesondere eine verbesserte Durchströmung des hülsenförmigen Grundkörpers der Fördereinrichtung erreicht werden und durch eine verstärkte Verwirbelung des Fluids eine verbesserte Kühlwirkung.
Besonders bevorzugt sind die ersten Durchgangsöffnungen als längliche Aussparungen ausgebildet. Weiter bevorzugt verlaufen die länglichen Aussparungen in Umfangsrichtung des hülsenförmigen Grundkörpers. Vorzugsweise sind bis zu vier längliche Aussparungen entlang der Umfangsrichtung des hülsenförmigen Grundkörpers vorgesehen.
Weiter bevorzugt sind die zweiten Durchgangsöffnungen im hülsenförmigen Grundkörper in Form von zylindrischen Bohrungen vorgesehen. Besonders bevorzugt sind die zylindrischen Bohrungen dabei entlang einer Umfangslinie am hülsenförmigen Grundkörper in gleichen Abständen angeordnet. Weiter bevorzugt ist ein Durchmesser der hülsenförmigen Bohrungen immer größer als ein minimaler Abstand zwischen zwei benachbarten Bohrungen.
Der hülsenförmige Grundkörper umfasst vorzugsweise einen radial nach innen gerichteten Flanschbereich, an welchem die zusätzliche Pumpstufe angeordnet ist. Vorzugsweise umfasst die zusätzliche Pumpstufe dabei eine Vielzahl von Flügeln oder Nasen, welche die Pumpwirkung bereitstellen.

Weiter bevorzugt umfasst die erfindungsgemäße Gleitringdichtungsanordnung einen Abfuhrkanal, wobei die zweiten Durchgangsöffnungen des hülsenförmigen Grundkörpers in Radialrichtung unterhalb des Abfuhrkanals liegen. Vorzugsweise liegen die zweiten Durchgangsöffnungen dabei vollständig in Radialrichtung unterhalb des Abfuhrkanals. Dadurch kann eine schnelle Abfuhr des Mediums von der Gleitringdichtungsanordnung erfolgen und somit ein schneller Wärmeabtransport ermöglicht werden.

Gemäß einer weiteren bevorzugten Ausgestaltung der vorliegenden Erfindung liegen die zweiten Durchgangsöffnungen in Radialrichtung über den Gleitringen und insbesondere über dem Dichtspalt zwischen dem rotierenden und dem stationären Gleitring. Dadurch kann eine besonders gute Wärmeabfuhr in diesem Bereich der Gleitringdichtungsanordnung, welcher üblicherweise die höchsten Temperaturen aufweist, sichergestellt werden.

Gemäß einer weiteren bevorzugten Ausgestaltung der vorliegenden Erfindung umfasst der hülsenförmige Grundkörper einen ersten Abschnitt mit einem ersten Außendurchmesser und einen zweiten Abschnitt mit einem zweiten Außendurchmesser, wobei der erste Außendurchmesser kleiner als der zweite Außendurchmesser ist. Dabei sind die ersten Durchgangsöffnungen am hülsenförmigen Grundkörper derart angeordnet, dass diese sowohl im ersten als auch im zweiten Abschnitt ausgebildet sind. Hierdurch wird eine Anströmkante im Bereich der ersten Durchgangsöffnungen realisiert, wodurch eine verbesserte Durchströmung des hülsenförmigen Grundkörpers erreicht wird. Weiterhin kann durch das Vorsehen eines zweiten Abschnitts mit größerem Außendurchmesser in Verbindung mit einem Gehäusebauteil eine Drosselwirkung am größeren Außendurchmesser erreicht werden, so dass eine Hauptströmung des zur Kühlung verwendeten Fluids durch die ersten Durchgangsöffnungen sichergestellt wird.

Weiter bevorzugt sind die zweiten Durchgangsöffnungen vollständig im zweiten Abschnitt mit größerem Durchmesser ausgebildet.

Weiter bevorzugt umfasst die Gleitringdichtungsanordnung ein Gehäuse, welches mit einem Außenumfang des hülsenförmigen Grundkörpers einen Spalt bildet. Ein Querschnitt des Spalts ist dabei gleich oder kleiner als ein Querschnitt aller ersten Durchgangsöffnungen und gleich oder kleiner als ein Querschnitt aller zweiten Durchgangsöffnungen. Dadurch wird sichergestellt, dass eine ausreichende Fluidmenge den Fluidpfad durch den hülsenförmigen Grundkörper nimmt und somit eine optimale Kühlwirkung erreicht wird.

Nachfolgend wird unter Bezugnahme auf die begleitende Zeichnung ein bevorzugtes Ausführungsbeispiel der Erfindung im Detail beschrieben. In der Zeichnung ist:
- Fig. 1: eine schematische Schnittansicht einer Gleitringdichtungsanordnung gemäß einem bevorzugten Ausführungsbeispiel der Erfindung,
- Fig. 2: eine schematische Seitenansicht einer in Fig. 1 gezeigten Fördereinrichtung, und
- Fig. 3: eine vergrößerte schematische Schnittansicht der Gleitringdichtungsanordnung von Fig. 1.

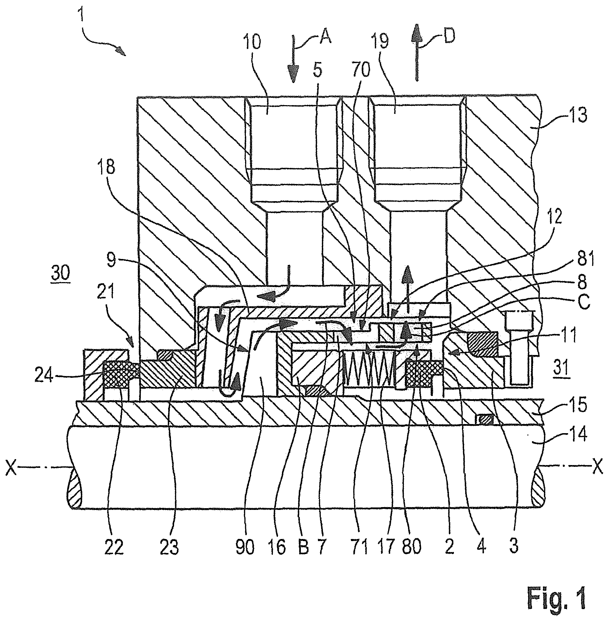

Nachfolgend wird unter Bezugnahme auf die Fig. 1 bis 3 eine Gleitringdichtungsanordnung 1 mit einer erfindungsgemäßen Fördereinrichtung 5 beschrieben.

Wie aus Fig. 1 ersichtlich ist, ist die Gleitringdichtungsanordnung 1 dieses Ausführungsbeispiels als doppeltwirkende Gleitringdichtungsanordnung mit einer ersten Gleitringdichtung 11 und einer zweiten Gleitringdichtung 21 ausgebildet. Die Gleitringdichtungsanordnung 1 dichtet dabei einen Produktbereich 30 von einem Atmosphärenbereich 31 ab. Die erste Gleitringdichtung 11 umfasst einen rotierenden Gleitring 2 und einen stationären Gleitring 3, welche zwischen sich einen Dichtspalt 4 definieren. In gleicher Weise ist die zweite Gleitringdichtung 21 mit einem rotierenden Gleitring 22 und einem stationären Gleitring 23 ausgebildet, welche zwischen sich einen Dichtspalt 24 definieren.

In Axialrichtung X-X ist dabei die Fördereinrichtung 5 angeordnet, welche auf einer an einer Welle 14 fixierten Wellenhülse 15 befestigt ist. Ein Mitnehmerbauteil 16 ist dabei ebenfalls auf der Wellenhülse 15 fixiert und über einen Faltenbalg 17 mit dem rotierenden Gleitring 2 der ersten Gleitringdichtung 11 verbunden.

Wie aus Fig. 1 weiter ersichtlich ist, wird ein Versorgungsmedium, z.B. ein unter Druck stehendes Sperrfluid, über einen Zufuhrkanal 10 und eine Fluidleiteinrichtung 18 zu den Gleitringdichtungen 11, 21 zugeführt. Das Bezugszeichen 19 bezeichnet einen Abfuhrkanal. Der Zuführkanal 10 und der Abfuhrkanal 19 sind dabei in einem Gehäuse 13 gebildet, welches auch mit den stationären Gleitringen 3 und 23 verbunden ist.

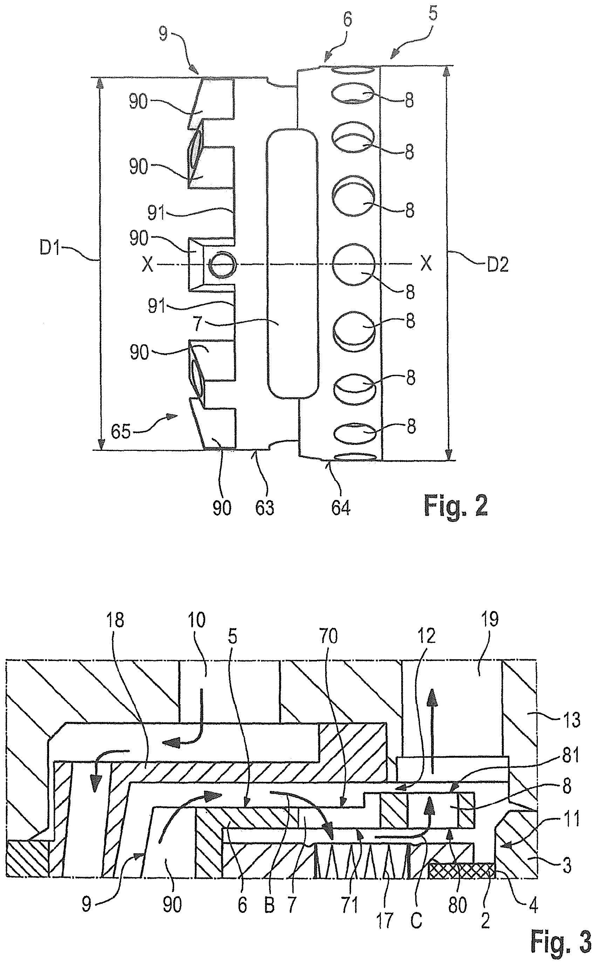

Wie insbesondere aus Fig. 2 ersichtlich ist, umfasst die Fördereinrichtung 5 einen hülsenförmigen Grundkörper 6. Der hülsenförmige Grundkörper 6 umfasst eine Vielzahl von ersten Durchgangsöffnungen 7 und eine Vielzahl von zweiten Durchgangsöffnungen 8. Die ersten Durchgangsöffnungen 7 sind als längliche, in Umfangsrichtung verlaufende Ausnehmungen vorgesehen, wobei in diesem Ausführungsbeispiel genau drei erste Durchgangsöffnungen 7 ausgebildet sind. Die zweiten Durchgangsöffnungen 8 sind als zylindrische Bohrungen ausgebildet. Die ersten und zweiten Durchgangsöffnungen 7, 8 sind dabei jeweils auf einer Umfangslinie des hülsenförmigen Grundkörpers 6 angeordnet.

Wie weiter aus Fig. 2 ersichtlich ist, weist der hülsenförmige Grundkörper 6 einen ersten Abschnitt 63 mit einem ersten Durchmesser D1 und einen zweiten Abschnitt 64 mit einem zweiten Durchmesser D2 auf. Der erste Durchmesser D1 ist dabei kleiner als der zweite Durchmesser D2. Die zweiten Durchgangsöffnungen 8 sind dabei ausschließlich im zweiten Abschnitt 64 mit größerem Durchmesser D2 ausgebildet. Die ersten Durchgangsöffnungen 7 sind derart am hülsenförmigen Grundkörper 6 vorgesehen, so dass diese sowohl im ersten Abschnitt 63 als auch im zweiten Abschnitt 64 ausgebildet sind.

An einem Axialende 65 des hülsenförmigen Grundkörpers 6 ist ferner eine zusätzliche Pumpstufe 9 vorgesehen. Die zusätzliche Pumpstufe 9 umfasst in Axialrichtung X-X vorstehende Nasen 90, wobei zwischen einander benachbarten Nasen 90 jeweils Zwischenräume 91 vorgesehen sind. Die Nasen 90 verjüngen sich dabei leicht in radial nach außen gerichteter Richtung.

Wie weiter insbesondere aus Fig. 3 ersichtlich ist, weist die erste Durchgangsöffnung 7 einen ersten Eintrittsbereich 70 auf, welcher an einem Außenumfang des hülsenförmigen Grundkörpers 6 vorgesehen ist. Ein erster Austrittsbereich 71 der ersten Durchgangsöffnungen 7 ist an einem Innenumfang des hülsenförmigen Grundkörpers 6 vorgesehen. Ferner ist ein zweiter Eintrittsbereich 80 der zweiten Durchgangsöffnungen 8 am Innenumfang des hülsenförmigen Grundkörpers 6 ausgebildet und ein zweiter Austrittsbereich 81 der zweiten Durchgangsöffnungen 8 ist am Außenumfang des hülsenförmigen Grundkörpers 6 vorgesehen. Dadurch wird am hülsenförmigen Grundkörper 6 eine Durchströmung von außen nach innen und dann von innen nach außen realisiert.

Die Funktion der erfindungsgemäßen Gleitringdichtungsanordnung 1 ist dabei wie folgt. Ein Versorgungsmedium, welches auch zur Kühlung verwendet wird, wird, wie in Fig. 1 mit dem Pfeil A angedeutet, über den Zufuhrkanal 10 zugeführt. Das Sperrfluid strömt durch die Fluidleiteinrichtung 18 zum äußeren Umfang der Wellenhülse 15, was in Fig. 1 durch die kleinen Pfeile angedeutet ist. Im Betrieb dreht sich die Welle 14 mitsamt der Wellenhülse 15, so dass sich auch die Fördereinrichtung 5 mitsamt den rotierenden Gleitringen 2, 22 dreht. Die Fördereinrichtung 5 ist dabei mittels Schrauben mit dem Mitnehmerbauteil 16 in Axialrichtung X-X verbunden und mittels Schrauben in radialer Richtung mit der Wellenhülse 15. Durch die Rotation der Fördereinrichtung 5 entwickelt die zusätzliche Pumpstufe 9 eine Förderwirkung, so dass das Fluid zum äußeren Umfang des hülsenförmigen Grundkörpers 6 gefördert wird.

Zwischen dem Gehäuse 13 und dem Außenumfang des hülsenförmigen Grundkörpers 6 ist eine Drosselstelle 12 gebildet, so dass das Fluid vom Außenumfang des hülsenförmigen Grundkörpers 6 durch die ersten Durchgangsöffnungen 7 in einen Innenbereich im hülsenförmigen Grundkörper 6 strömt. Dies ist in Fig. 3 durch den Pfeil B angedeutet. Vom Innenbereich des hülsenförmigen Grundkörpers 6 strömt das Fluid dann durch die zweiten Durchgangsöffnungen 8 radial nach außen, was in Fig. 3 mit dem Pfeil C angedeutet ist.

Die zweiten Austrittsbereiche 81 der zweiten Durchgangsöffnungen 8 liegen dabei vollständig radial unterhalb des Abfuhrkanals 19. Dadurch wird ein schneller und effektiver Abtransport des Fluids von der Fördereinrichtung 5 bereitgestellt.

Das zur Kühlung verwendete Fluid strömt somit von einer Außenseite der Fördereinrichtung 5 durch die erste Durchgangsöffnung 7 zu einer Innenseite und von der Innenseite durch die zweiten Durchgangsöffnungen 8 wieder zur Außenseite der Fördereinrichtung 5. Hierdurch wird eine Zwangsumleitung des Fluids mit nur einem einzigen Bauteil erreicht, welches darüber hinaus auch nur einen sehr kleinen Bauraum einnimmt. Dadurch kann das zur Kühlung verwendete Fluid direkt zu den am stärksten wärmebelasteten Bauteilen der Gleitringdichtungsanordnung 1 geführt werden und die Wärme kann effektiv von diesen Bauteilen abgeführt werden. Durch die Verwendung der zusätzlichen Pumpstufe 9 am Axialende 65 der Fördereinrichtung 5 kann die Pumpwirkung noch verstärkt werden.

Die Fördereinrichtung 5 umfasst somit die durch die ersten und zweiten Durchgangsöffnungen 7, 8 gebildete erste Pumpstufe sowie die am Axialende 65 vorgesehene zweite Pumpstufe 9. Wie aus den Fig. 1 und 3 unmittelbar ersichtlich ist, weist die erfindungsgemäße Fördereinrichtung 5 dabei einen besonders kompakten Aufbau auf. Der Aufbau ist dabei sowohl in axialer Richtung X-X als auch in radialer Richtung sehr kleinbauend. Dadurch kann auf kleinstem Bauraum eine Fördereinrichtung 5 angeordnet werden, welche effektiv eine verbesserte Wärmeabfuhr an den Gleitringdichtungen ermöglicht. Dabei werden die verschiedenen Umlenkungen und Förderungen nur mit einem einzigen Bauteil, nämlich der Fördereinrichtung 5, erreicht. Somit kann eine kostengünstig und relativ einfach herstellbare Fördereinrichtung 5 bereitgestellt werden, welche signifikante Vorteile gegenüber den bisher verwendeten Fördereinrichtungen aufweist und eine deutliche verbesserte Wärmeabfuhr ermöglicht. Weiterhin ist die erfindungsgemässe Fördereinrichtung drehrichtungsunabhängig und hat einen sehr bereiten Anwendungsbereich

### Bezugszeichenliste:

- 1: Gleitringdichtungsanordnung
- 2: rotierender Gleitring
- 3: stationärer Gleitring
- 4: Dichtspalt
- 5: Fördereinrichtung
- 6: hülsenförmiger Grundkörper
- 7: erste Durchgangsöffnung
- 8: zweite Durchgangsöffnung
- 9: zusätzliche Pumpstufe an der Fördereinrichtung
- 10: Zufuhrkanal
- 11: erste Gleitringdichtung
- 12: Drosselstelle
- 13: Gehäuse
- 14: Welle
- 15: Wellenhülse
- 16: Mitnehmerbauteil
- 17: Faltenbalg
- 18: Fluidleiteinrichtung
- 19: Abfuhrkanal
- 21: zweite Gleitringdichtung
- 22: rotierender Gleitring
- 23: stationärer Gleitring
- 24: Dichtspalt
- 63: erster Abschnitt
- 64: zweiter Abschnitt
- 65: Axialende
- 70: erster Eintrittsbereich
- 71: erster Austrittsbereich
- 80: zweiter Eintrittsbereich
- 81: zweiter Austrittsbereich
- 90: Nasen/Schaufeln
- 91: Zwischenräume
- X-X: Axialrichtung
- A: Zuströmung
- B/C: Durchströmung des hülsenförmigen Grundkörpers
- D: Abströmung
- D1: erster Durchmesser
- D2: zweiter Durchmesser

## Patentansprüche

1. Gleitringdichtungsanordnung, umfassend:
- einen rotierenden Gleitring (2) und einen stationären Gleitring (3), welche zwischen sich einen Dichtspalt (4) definieren, und
- eine Fördereinrichtung (5) zum Fördern eines Fluids, wobei die Fördereinrichtung (5) einen hülsenförmigen Grundkörper (6) mit ersten Durchgangsöffnungen (7) und zweiten Durchgangsöffnungen (8) aufweist, wobei die Fördereinrichtung (5) gemeinsam mit dem rotierenden Gleitring (2) rotiert,
- wobei die ersten Durchgangsöffnungen (7) jeweils einen ersten Eintrittsbereich (70) an einem Außenumfang des hülsenförmigen Grundkörpers (6) und einen ersten Austrittsbereich (71) an einem Innenumfang des hülsenförmigen Grundkörpers (6) aufweisen, und wobei die zweiten Durchgangsöffnungen (8) jeweils einen zweiten Eintrittsbereich (80) am Innenumfang des hülsenförmigen Grundkörpers (6) und einen zweiten Austrittsbereich (81) am Außenumfang des hülsenförmigen Grundkörpers (6) aufweisen,
**gekennzeichnet durch**
eine zusätzliche Pumpstufe (9) an einem Axialende (65) des hülsenförmigen Grundkörpers (6).

2. Gleitringdichtungsanordnung nach Anspruch 1 , **dadurch gekennzeichnet, dass** die ersten Durchgangsöffnungen (7) eine von den zweiten Durchgangsöffnungen (8) unterschiedliche geometrische Form aufweisen.

3. Gleitringdichtungsanordnung nach einem der vorhergehenden Ansprüche, **dadurch gekennzeichnet, dass** die ersten Durchgangsöffnungen (7) als längliche Aussparungen vorgesehen sind.

4. Gleitringdichtungsanordnung nach Anspruch 3, **dadurch gekennzeichnet, dass** die ersten Durchgangsöffnungen (7) in Umfangsrichtung des hülsenförmigen Grundkörpers (6) verlaufen.

5. Gleitringdichtungsanordnung nach einem der vorhergehenden Ansprüche, **dadurch gekennzeichnet, dass** die zweiten Durchgangsöffnungen (8) als zylindrische Bohrungen vorgesehen sind.

6. Gleitringdichtungsanordnung nach Anspruch 1, **dadurch gekennzeichnet, dass** die zusätzliche Pumpstufe (9) in Axialrichtung (X-X) vorstehende Nasen umfasst.

7. Gleitringdichtungsanordnung nach einem der vorhergehenden Ansprüche, **dadurch gekennzeichnet, dass** die zweiten Durchgangsöffnungen (8) in Radialrichtung unterhalb eines Abfuhrkanals (19) angeordnet sind.

8. Gleitringdichtungsanordnung nach einem der vorhergehenden Ansprüche, **dadurch gekennzeichnet, dass** die zweiten Durchgangsöffnungen (8) in Radialrichtung über den Gleitringen angeordnet sind und insbesondere in Radialrichtung über dem Dichtspalt (4) angeordnet sind.

9. Gleitringdichtungsanordnung nach einem der vorhergehenden Ansprüche, **dadurch gekennzeichnet, dass** der hülsenförmige Grundkörper (6) einen ersten Abschnitt (63) mit einem ersten Außendurchmesser (D1) und einen zweiten Abschnitt (64) mit einem zweiten Außendurchmesser (D2) aufweist, wobei der erste Außendurchmesser (D1) kleiner als der zweite Außendurchmesser (D2) ist und wobei die ersten Durchgangsöffnungen (7) sowohl im ersten Abschnitt (63) als auch im zweiten Abschnitt (64) ausgebildet sind.

10. Gleitringdichtungsanordnung nach Anspruch 9, **dadurch gekennzeichnet, dass** die zweiten Durchgangsöffnungen (8) ausschließlich im zweiten Abschnitt (64) ausgebildet sind.

11. Gleitringdichtungsanordnung nach einem der vorhergehenden Ansprüche, ferner umfassend ein Gehäuse (13), wobei zwischen einem Außenumfang des hülsenförmigen Grundkörpers (6) und einem Innenumfang des Gehäuses (13) ein Spalt (12) ausgebildet ist, welcher eine Querschnittsfläche aufweist, die gleich oder kleiner ist als eine Querschnittsfläche der ersten Durchgangsöffnungen (7) und gleich oder kleiner ist eine Querschnittsfläche der zweiten Durchgangsöffnungen (8).

## Claims

1. Mechanical seal arrangement comprising:
- a rotating slide ring (2) and a stationary slide ring (3), which define a sealing gap (4) between them, and
- a delivery device (5) for delivering a fluid, wherein the delivery device (5) has a sleeve-like basic body (6) with first through-openings (7) and second through-openings (8), wherein the delivery device (5) rotates jointly with the rotating slide ring (2),
- wherein the first through-openings (7) each have a first entry region (70) on an outer periphery of the sleeve-like basic body (6) and a first exit region (71) on an inner periphery of the sleeve-like basic body (6), and wherein the second through-openings (8) each have a second entry region (80) on the inner periphery of the sleeve-like basic body (6) and a second exit region (81) on the outer periphery of the sleeve-like basic body (6),
**characterized by**
an additional pump stage at an axial end (55) of the sleeve-like basic body (6).

2. Mechanical seal arrangement as claimed in claim 1, **characterised in that** the first through-openings (7) have a geometrical form different from the second through-openings (8).

3. Mechanical seal arrangement as claimed in any one of the preceding claims, **characterised in that** the first through-openings (7) are provided as elongate apertures.

4. Mechanical seal arrangement as claimed in claim 3, **characterised in that** the first through-openings (7) extend in the peripheral direction of the sleeve-like basic body (6).

5. Mechanical seal arrangement as claimed in any one of the preceding claims, **characterised in that** the second through-openings (8) are provided as cylindrical bores.

6. Mechanical seal arrangement as claimed in claim 1, **characterised in that** the additional pump stage (9) comprises lugs protruding in the axial direction (X-X).

7. Mechanical seal arrangement as claimed in any one of the preceding claims, **characterised in that** the second through-openings (8) are disposed in the radial direction below a discharge channel (19).

8. Mechanical seal arrangement as claimed in any one of the preceding claims, **characterised in that** the second through-openings (8) are disposed in the radial direction over the slide rings and are disposed in particular in the radial direction over the sealing gap (4).

9. Mechanical seal arrangement as claimed in any one of the preceding claims, **characterised in that** the sleeve-like basic body (6) has a first portion (63) with a first outer diameter (D1) and a second portion (64) with a second outer diameter (D2), wherein the first outer diameter (D1) is smaller than the second outer diameter (D2) and wherein the first through-openings (7) are formed both in the first portion (63) and also in the second portion (64).

10. Mechanical seal arrangement as claimed in claim 9, **characterised in that** the second through-openings (8) are formed exclusively in the second portion (64).

11. Mechanical seal arrangement as claimed in any one of the preceding claims, further comprising a housing (13), wherein a gap (12) is formed between an outer periphery of the sleeve-like basic body (6) and an inner periphery of the housing (13), this gap comprising a cross-sectional area which is equal to or smaller than a cross-sectional area of the first through-openings (7) and equal to or smaller than a cross-sectional area of the second through-openings (8).

## Revendications

1. Agencement de joint d'étanchéité à bague de glissement, comprenant :
- une bague de glissement rotative (2) et une bague de glissement fixe (3), lesquelles définissent une fente d'étanchéité (4) entre elles, et
- un dispositif de refoulement (5) pour le refoulement d'un fluide, dans lequel le dispositif de refoulement (5) présente un corps de base en forme de manchon (6) avec des premières ouvertures de passage (7) et deuxièmes ouvertures de passage (8), dans lequel le dispositif de refoulement (5) tourne conjointement avec la bague de glissement rotative (2),
- dans lequel les premières ouvertures de passage (7) présentent respectivement une première zone d'entrée (70) au niveau d'une circonférence extérieure du corps de base en forme de manchon (6) et une première zone de sortie (71) au niveau d'une circonférence intérieure du corps de base en forme de manchon (6), et dans lequel les deuxièmes ouvertures de passage (8) présentent respectivement une deuxième zone d'entrée (80) au niveau de la circonférence intérieure du corps de base en forme de manchon (6) et une deuxième zone de sortie (81) au niveau de la circonférence extérieure du corps de base en forme de manchon (6),
caractérisé en ce
un étage de pompage supplémentaire (9) au niveau d'une extrémité axiale (65) du corps de base en forme de manchon (6).

2. Agencement de joint d'étanchéité à bague de glissement selon la revendication 1, **caractérisé en ce que** les premières ouvertures de passage (7) présentent une forme géométrique différente des deuxièmes ouvertures de passage (8).

3. Agencement de joint d'étanchéité à bague de glissement selon l'une quelconque des revendications précédentes, **caractérisé en ce que** les premières ouvertures de passage (7) sont prévues en tant qu'évidements oblongs.

4. Agencement de joint d'étanchéité à bague de glissement selon la revendication 3, **caractérisé en ce que** les premières ouvertures de passage (7) s'étendent dans la direction circonférentielle du corps de base en forme de manchon (6).

5. Agencement de joint d'étanchéité à bague de glissement selon l'une quelconque des revendications précédentes, **caractérisé en ce que** les deuxièmes ouvertures de passage (8) sont prévues en tant que perçages cylindriques.

6. Agencement de joint d'étanchéité à bague de glissement selon la revendication 1, **caractérisé en ce que** l'étage de pompage supplémentaire (9) comprend des nez en saillie dans la direction axiale (X-X).

7. Agencement de joint d'étanchéité à bague de glissement selon l'une quelconque des revendications précédentes, **caractérisé en ce que** les deuxièmes ouvertures de passage (8) sont agencées dans la direction radiale sous un canal d'évacuation (19).

8. Agencement de joint d'étanchéité à bague de glissement selon l'une quelconque des revendications précédentes, **caractérisé en ce que** les deuxièmes ouvertures de passage (8) sont agencées dans la direction radiale au-dessus des bagues de glissement et sont agencées en particulier dans la direction radiale au-dessus de la fente d'étanchéité (4).

9. Agencement de joint d'étanchéité à bague de glissement selon l'une quelconque des revendications précédentes, **caractérisé en ce que** le corps de base en forme de manchon (6) présente une première section (63) avec un premier diamètre extérieur (D1) et une deuxième section (64) avec un deuxième diamètre extérieur (D2), dans lequel le premier diamètre extérieur (D1) est inférieur au deuxième diamètre extérieur (D2) et dans lequel les premières ouvertures de passage (7) sont réalisées aussi bien dans la première section (63) que dans la deuxième section (64).

10. Agencement de joint d'étanchéité à bague de glissement selon la revendication 9, **caractérisé en ce que** les deuxièmes ouvertures de passage (8) sont réalisées exclusivement dans la deuxième section (64).

11. Agencement de joint d'étanchéité à bague de glissement selon l'une quelconque des revendications précédentes, comprenant en outre un boîtier (13), dans lequel une fente (12) est réalisée entre une circonférence extérieure du corps de base en forme de manchon (6) et une circonférence intérieure du boîtier (13), laquelle présente une surface de section transversale, qui est égale ou inférieure à une surface de section transversale des premières ouvertures de passage (7) et est égale ou inférieure à une surface de section transversale des deuxièmes ouvertures de passage (8).
